(19) **Europäisches Patentamt / European Patent Office / Office européen des brevets**

(11) **EP 1 499 117 B1**

(12) **EUROPEAN PATENT SPECIFICATION**

(45) Date of publication and mention
of the grant of the patent:
**05.12.2007 Bulletin 2007/49**

(51) Int Cl.:
*H04N 5/275* [(2006.01)]     *H04N 9/75* [(2006.01)]

(21) Application number: **04254263.9**

(22) Date of filing: **16.07.2004**

(54) **Video processing**

Videoverarbeitung

Traitement vidéo

(84) Designated Contracting States:
**BE DE FR GB IT**

(30) Priority: **16.07.2003 GB 0316664**
**17.07.2003 GB 0316801**

(43) Date of publication of application:
**19.01.2005 Bulletin 2005/03**

(73) Proprietor: **BRITISH BROADCASTING
CORPORATION
London W1A 1AA (GB)**

(72) Inventors:
- **Thomas, Graham Alexander
Uckfield
East Sussex TN2 3HA (GB)**
- **Russell, Richard Thomas
Orsett,
Essex RM16 3DF (GB)**

(74) Representative: **Kazi, Ilya et al
Mathys & Squire
120 Holborn
London EC1N 2SQ (GB)**

(56) References cited:
**GB-A- 2 321 565**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 499 117 B1

**Description**

This invention relates to processing of video, particularly keying to separate foreground and background areas of an image.

Chroma-keying is a technique that allows an image to be separated into foreground and background or allows two images to be combined by determining if each pixel in one image belongs to foreground or background, based on colour. The foreground pixels can then be keyed into the second image, e.g. a computer-generated or static background as in a virtual studio. The background in the studio must have the particular keying colour, typically blue. This is usually achieved by painting the studio floor and visible walls with the keying colour. Another option is to use a retro-reflective cloth and an active illumination ring around the camera lens as proposed in our earlier application GB-A-2,321,814.

Chroma-keying is useful where the background is simply to be discarded (which is the usual case) and only the foreground is of interest and thus the background can be made uniform and coloured (or patterned) as desired. The effect of lighting on the background is not important as the background image will not feature in a final image. However, in some situations, the use of chroma-key is not convenient, particularly when the background consists of a scene such as a real studio set, people, or an outdoor landscape.

In situations where the background is static, it is possible to use an approach known as difference keying to identify areas that match a stored reference image of the background. However, when the camera moves, this approach becomes difficult, and if the background contains moving objects it is normally practically impossible. Such methods may also fail if there are large areas of the foreground subject that happen to match the background immediately behind. More sophisticated difference keying techniques may alleviate these problems.

A very different possible approach we have considered is based on measurement of the distance of points in the image to the camera, so that parts of the image with depths in a defined range may be classified as foreground.

One class of depth measurement techniques, known as passive techniques, work with the light scattered naturally from the scene. An example of such a method is stereoscopy, wherein two or more separated cameras are used to capture images which are analysed to determine the relative offset, or disparity, between corresponding points in the images. These techniques rely on having sufficient image detail present in the scene, and tend to fail when this is not the case so they can also be difficult to implement in real-time, and require a bulky arrangement of cameras and are not intrinsically suited to real-time generation of a key signal for broadcast video.

By way of background, another class of generalised depth measurement methods use a so-called active system, that projects light with a particular characteristic onto the scene, from which distance can be derived. One example of an active system is the so-called Z-Cam described in the paper "3D Imaging in the studio (and elsewhere....)" by G.J. Iddan and G. Yahav, Proc. Of SPIE, Conference Proc. of Videometrics and Optical Methods for 3D Shape Measurement, pp. 48-55, January 2001, wherein pulsed infra-red light is sent out from a light source adjacent to the camera, and the time-of-flight of the light is measured using an infra-red camera fitted with a high-speed shuttering system. This approach requires a very sophisticated camera and light source, and only works over relatively short distances, beyond which the intensity of the reflected light becomes too low.

Another example of an active depth measurement approach is given in "A low-cost 3D scanner based on structured light" by C. Rocchini et al, Eurographics 2001, Vol. 20 No. 3, wherein light in a particular pattern is projected from a point a little way away from the camera, and the image is analysed to identify the displacement of the pattern at each point. This approach requires computationally-intensive processing which is difficult to achieve in real-time, and cannot easily identify the precise location of an object edge, since the information needed to identify the displacement of the pattern cannot be obtained by analysis of each pixel individually. Also, there may not be sufficient information at all points in the projected pattern to give a reliable depth estimate.

However, a problem with active depth measurement techniques which project light onto a target is that the added light in the picture would appear to make the technique unsuitable for use in television production. Furthermore, we have appreciated that for many applications requiring keying, it is not necessary to have a full depth map of the scene, but merely to determine if an object is foreground or background, so such depth measurement techniques are not intrinsically promising for broadcast keying applications.

WO 03/030526 outlines one possible approach to discriminating foreground from background, in which a video signal is processed with a colour matrix, and an alternative possible approach in which a film camera is used with a modulated illumination intensity during filming. The disclosure is at an outline level and details of producing outputs of practically acceptable quality are not provided.

GB-A-2,321,565 describes another use of the retro-reflective material described above, in which the projected light may vary in time with respect to brightness and/or colour.

An aim of at least preferred embodiments is to provide a system for detecting foreground areas or enabling foreground and background to be separated and which can provide images of the foreground areas suitable for broadcast, preferably requiring only a single camera and preferably a conventional studio camera with little or no modification.

Aspects of the invention are set out in the independent claims and preferred features are set out in the dependent claims and below. Preferred features of each aspect may be applied to other aspects unless otherwise stated and all aspects may be provided as method, apparatus and computer programs or computer program products unless otherwise stated. Although described herein for ease of understanding in the context of an interlaced PAL system, the invention may be applied to field or frame based images, to progressive or interlaced video and to any standard desired, including PAL, NTSC, film, web-suitable formats, HDTV formats etc and all terms and timings used herein should be construed to include equivalents in other formats.

According to a first aspect, the invention consists in a method of obtaining an image of a scene containing at least one primary object and at least one secondary object to provide an image of at least the primary object and a key signal for distinguishing the primary object from the secondary object, the method comprising:

illuminating the primary object with key light having a selected colour and a selected temporal variation, such that the secondary object is not illuminated by the key light or such that the primary object is illuminated with key light to a substantially higher extent than the secondary object ;
obtaining at least a first and a second image of the scene both including the primary object and the secondary object, the temporal variation of the key light being such that the amplitude of the key light is different between the first image and the second image;
deriving the key signal for distinguishing the primary object from the secondary object through comparison of different amounts of key light colour in the first and second images, respectively; and
processing the first or second image based on said different amounts of said key light colour to provide a third image of the scene in which the effect of said key light on the appearance of the primary object is reduced compared to the first or second image.

Preferably, the invention consists in a method according to Claim 1 wherein the at least one primary object is a foreground object and wherein the at least one secondary object is a background object.

Thus the foreground object is lit with light having a particular property. This would at first sight seem an unhelpful thing to do for a situation where an image of the foreground object is required as this light would of course affect the image. However, we have found that nonetheless an image can be obtained in which the effect of the light on the foreground image can be reduced and in preferred embodiments substantially eliminated. The foreground object is preferably an object which may be viewed and of which an image may be required but is not limited to any particular spatial location in a studio and may comprise an element of the background. Similarly, the background from which the object is to be distinguished may in fact comprise a prominent part of a scene, e.g. a presenter.

Preferably the foreground key light has a selected colour corresponding to one of the primary colour channels of a camera obtaining the image, most preferably, for a red green blue (RGB) camera, the blue channel. In this way, objects may be detected as foreground objects by comparing the level of the corresponding colour channel between the first and second frames. Objects can be matched using the other (two) primary colour channels, which is substantially constant for a given object between the first and second frames and the level of the selected colour primary colour channel for the first frame may be adjusted to the same proportion as in the second frame. Advantageously, motion compensation may be applied between the first and second frames to match objects. In place of primary colours, a derivative colour may be used, for example by taking weighted proportions of the primary colours. This may be convenient where a primary colour is problematic for a particular subject. In such a case, a reference colour may also be derived by different weighted proportions, preferably so that the reference colour is substantially unaffected by the foreground key light.

In a preferred embodiment, the light is applied so as to be on during alternate camera shutter periods. In a preferred arrangement, the light is applied additionally during at least some periods when the camera shutter is closed. We have found that, while this does not affect image capture, it is beneficial to users within the scene as the apparent flashing rate is higher and so flicker is less perceptible. Preferably the light is applied at least once for each shutter period. Thus, even for periods when the light is "off", a light is applied at a time when the shutter is not open. More than one flash may be applied during shutter periods, particularly periods when the light is on during the shutter period. The lighting pulse pattern may be regular having a cycle that repeats continuously or which repeats every 2 (or more) shutter periods but is essentially irregular in between, or may be generated for each shutter period.

In one embodiment, if the camera shutter open period is limited to 1/3 the shutter interval, the lighting may be applied with a pattern that is on for exactly one third of a shutter interval and off for exactly one third of an interval. In this way, the light will be on during a first shutter interval when the shutter is open, on again at the end of the interval when the shutter is closed, off for the next open shutter interval and on again thereafter, the pattern repeating with the light on during the next open shutter interval. In this way, the light flashes on three times every two shutter intervals. This may be suitable for a light source which can be controlled accurately to produce light at a specified timing. Preferably the key light source comprises an LED source and means for controlling the source to produce light at a specified timing.

The above embodiment has the potential drawback that the camera shutter is limited to being open for 1/3 of the shutter interval, although this may be acceptable in many cases. In an alternative embodiment, the on periods may differ in duration from the off periods (duty cycle variation) and/or the on periods may differ from each other and/or the intensity of light during on periods may differ. The on period need not be equal to the camera open period as it is sufficient for the light to be applied at a time when the shutter is open and the camera is integrating.

In another implementation the key light comprises short duration flashes (e.g. from a flash lamp) and may be applied close to the start of the shutter opening time, the timing of the flashes being "dithered" so that in alternate intervals the flashes occur just before the shutter opens (light off) or just after the shutter opens (light on). In this case the flash rate will be the same as the camera shutter frequency but the camera shutter can be open for almost the entire shutter interval (typically up to 90% or more).

Alternatively, the light may be applied at a first intensity for a first, typically longer, period when the shutter is open and at a second intensity for a second, typically shorter, period when the shutter is closed. The intensities are preferably chosen so that the perceived effect of flickering is minimised - theoretically the energy should be the same each pulse, so the product of duration and power should be the same for each pulse. However, due to the limitations of integration accuracy of the human eye we have found that this need not be strictly complied with. This can be beneficial; the limitations of the light source, either minimum time that can be accurately controlled or, more usually, the maximum permitted power, may limit the timings within which the equal energy principle can be complied with accurately but operation slightly outside these limits may nonetheless be possible - acceptable limits can of course be very readily determined empirically with immediate feedback simply by adjusting parameters within limits that are acceptable to the users in a given scene.

In one embodiment the method is performed repeatedly to obtain a sequence of captured images of said scene, wherein the amount of key light varies across images in the sequence of captured images; deriving from the sequence of captured images a key signal comprising a sequence of key images in which said primary and secondary objects are distinguished based on the effect of key light; and deriving a sequence of real time output images from the sequence of captured images in which the effect of variation of key light in the sequence of output images is reduced with respect to the sequence of captured images. Preferably a key image is produced for each output image.

Also described herein is a light source controller comprising means for receiving camera shutter synchronisation information and timing control means for providing an output signal to drive a light source to provide a selected sequence of on and off periods of light during successive camera shutter periods. The apparatus preferably further comprises said light source and may be arranged for mounting on a camera and may be integrated with a camera. The selected sequence preferably comprises alternately on and off during successive camera shutter periods. The timing control means may be additionally arranged to provide further periods of light during periods when the camera shutter is closed. The synchronisation information is preferably provided by a synchronisation signal providing a trigger signal every camera interval, preferably at a set time within the interval, preferably at the start thereof, or at a set offset from the start. In a preferred embodiment, the timing control means is adapted to drive a light source three times every two shutter periods. For a 50Hz field rate camera therefore, the timing control means is adapted to drive a light source at 75 Hz, preferably with a 50% duty cycle. Alternatively the timing control means can be adapted to drive the light source substantially it the start of the shutter opening time, preferably dithered such that periods of light are provided alternately just before and just after the shutter opens.

It is desirable that the light source controller additionally controls the intensity of the light source. The intensity of each flash is preferably controlled so as to minimise the perceived effect of flicker, preferably by controlling the energy of each pulse to be the same. Further preferred features of the first aspect may be applied to the second aspect (for example the light source may be a flash or LED and the timing patterns and considerations apply directly).

Further described here is a method of operating a light source comprising receiving camera shutter synchronisation information and driving the light source to provide a selected sequence of on and off periods of light during successive camera shutter periods.

According to an embodiment, the second image may be obtained at a different time when the intensity of the light is lower. For example, with a 100 fps camera, a 50 fps video output may be provided when the light is on for keying purposes and a separate 50 fps output may be obtained when the light is off for broadcast purposes. Preferably where the second and first images are obtained at different times, the key image may be shifted based on estimated motion to the time of a corresponding output image. The light source controller of the second aspect may be used to provide light pulses for this embodiment as well.

Selectively lighting the foreground may comprise lighting the scene with a foreground light source positioned close to the camera, preferably a substantially localised light source having a substantially non-collimated beam. The intensity of illumination from a light source generally falls off approximately as a function of the square of the distance from the source and so, if the foreground object(s) is significantly closer to the camera, it will receive a significantly higher degree of illumination from the foreground light source. The foreground light source may additionally or alternatively comprise a plurality of lights arranged together to project light preferentially at a foreground region of the scene, for example one or more lights arranged to project substantially forwardly of a location in the scene or a plurality of lights arranged to add in a foreground region only.

We have realised that the detection of flashing illumination in the presence of movement may be greatly improved if the illumination is predominantly of a single colour, since the remaining colour channels may be used reliably for motion detection. We therefore propose that the part of the scene for which a key signal is to be generated is illuminated with a substantially monochromatic light in alternate images. This light source is used in addition to the normal studio lighting. Furthermore, we have realised that the use of such coloured flashing illumination enables the flashing illumination to be substantially eliminated from the camera images. This then allows the illumination to be applied to the foreground objects (the parts of the scene that are to remain visible in the final image) rather than to background areas as we proposed in GB-A-2,321,814.

Although the light is preferably a visible colour, it may be an invisible "colour", such as infra-red or ultra-violet, preferably detected by a separate "colour" channel in a specially modified camera but it may be detectable by a property of the camera - for example most CCD cameras will detect near infra red and an extra channel may be provided by detecting the relative proportions in each colour channel and/or by selectively activating an infra-red filter and obtaining additional images.

Optionally, the background is preferentially lit with a background light source having a different colour and /or temporal variation property to the foreground illumination. For example, the background may be preferentially lit in alternate intervals with the same colour or a different colour or may be preferentially lit with a different colour during the same intervals. The different colour may be another substantially single primary colour channel (e.g. red or green in the case of a blue foreground light) or may be the complementary colour (yellow in the case of blue, equivalent to both of the other primary colours). In one embodiment, lighting the background in this way may be used to cancel the effect of any light aimed at the foreground person that finds its way to and is reflected from the background. To allow the effect of the flashing light to be cancelled from the background, the original image may not be output in the fields where the foreground is not flashed, rather the image may always be taken from the flash remover device, which is described in more detail below.

As will be appreciated, although in a preferred embodiment light may be applied to a foreground object, in some situations it may be preferable to apply light to a selected object, irrespective of its position in the scene, or to apply light to an object in the background of the scene or to the background itself. Hence, references herein to a foreground object are intended to encompass any object or any part of a scene that may be viewed, at least partially or at some time, whether this object is part of the foreground or part of the background.

Also described herein is a method of obtaining an image of a selected object comprising lighting the selected object with selected light which has a modifying effect on the appearance of the selected object, obtaining an image of a scene containing the selected object and at least one other object, deriving an output distinguishing the selected object from the at least one other object based on the selected light and processing the image to reduce the modifying effect to provide said image of the selected object.

Hence the image of the selected object, which may be a foreground object, a background object or the background itself, may be obtained by lighting the selected object differently with respect to the rest of the image. In one embodiment, a second image of the scene is obtained in which the effect of the selected light on the appearance of the selected object is reduced compared to the first image.

In contrast to the Chroma-keying method described above, the selected object may not be keyed out, rather, an image of the selected object may be created by removing the pulsed illumination so that at least part of the selected object may be retained in the final image. This embodiment may allow a partially real and partially virtual background to be created. For example, in one embodiment, part of a background of a television studio set may be illuminated with selected (e.g. pulsed) light to identify the background and a section of the illuminated background may be keyed out to allow a virtual graphic to be inserted.

Sections of the background that are not covered by the graphic may be processed to reduce the selected light ("de-flashed"), as described in more detail below, so that areas of the real background television studio set not covered by the graphic may be viewed. For example, the graphic may itself have its own key signal making parts of it transparent and the system may be arranged to allow the de-flashed background to be viewed through the transparent parts of the graphic. Similarly, the whole of the real background television studio may be de-flashed and viewed when no graphic is being inserted. In addition, foreground objects, such as a presenter, may appear in front of the inserted graphic.

The methods described herein may be used in conjunction with conventional Chroma-keying methods or, for example, with the methods and apparatus disclosed in GB-A-2,321,814. For example, an object or element of the scene may be lit differently, e.g. an image of a background surface may be formed using methods described herein, but a selected area of the background surface, for example a retro-reflective area of the background surface, may be further identified or keyed out by providing means for detecting brightness or colour within defined thresholds.

Advantageous features of the other aspects described herein may be applied to the aspects described above and apparatus and a computer program or computer program product may further be provided to implement the method of the present aspect.

In place of applying light (increasing particular light), equivalent results can be obtained by switching a particular light off (decreasing particular light) during selected intervals. As will of course be appreciated by those skilled in the art, references to a camera shutter will in the majority of cases refer to an electronic "shutter" - most modern cameras effect shuttering by electronic control of the integrating period.

Some advantages of certain preferred features will be further explained to aid understanding of the principles, before description of a specific embodiment.

By making the flashing illumination have predominantly a single colour, preferably either red, green or blue, the remaining colour channels in the image may be used to perform motion detection or estimation, in order to identify the portion of an adjacent image with which to compare. At simplest, this can be a pixel-wise test of which out of the preceding or the following images gives the closest match to the current image in the remaining colour channels. This approach is sufficient to deal with scenes where moving objects have a substantially uniform colour, as it detects areas of revealed and concealed background. Motion estimation can be applied to give a more accurate match.

We have also realised that it is advantageous to detect flashing in a signal derived from the colour image in such a way that commonly-occurring edges in an image such as those where there is a change in brightness but not in colour will not give rise to variations in the signal. Thus, if the flashing illumination was blue, we should look for changes in the value of the blue colour difference signal B-Y or more preferably a colour ratio or colour function, as discussed further herein, rather than in the blue signal itself. The colour function signal will generally have a low value in typical scenes, so movement will not generate large variations in this signal, whereas the blue signal will vary significantly across a black-to-white transition.

Having determined the region in the preceding and/or following image that gives the best match in the colour channels that are least affected by the flashing illumination, this region can be used to derive the correct value for the colour channel that has been affected by the flash. At simplest, this can be achieved by replacing the flashed colour with the value of this colour in the selected adjacent image, or an average of the values in both images if both are found to give a reasonable match. We have found that it is generally advantageous to carry out this replacement process for all pixels in the image subject to the flash, rather than only performing it for pixels in regions deemed to be in the part of the image illuminated by the flash. This prevents problems with setting a threshold on the detected flash signal. A range of values for the permitted degree of correction (the difference between the pixel to be replaced and the interpolated value) can be specified, based on the known maximum intensity of the pulsed light. By limiting the correction to this range, the possibility of introducing significant artefacts in moving areas is reduced. At simplest, the degree of correction would be limited to make the replaced value have a lower intensity than the original pixel.

We have also found it to be advantageous to carry out a limited replacement process for the colour channels other than the one predominantly affected by the flash. These channels are likely to suffer some effects from the flash, due to the flashed light having some energy at wavelengths to which the other channels are sensitive, and due to effects in the camera such as matrixing of the received signals from the three colour sensors in order to form the required standard RGB values. We have found that the correction value applied to these other channels can be limited to an amount dependant on the amplitude of the correction applied to the channel receiving the dominant amount of the flashed light, as this gives an approximate measure of the amount of flashed light likely to be present at each point in the scene. The measure is only approximate since it depends on the colour of the scene at each point, so fairly wide tolerances must be allowed. However, this provides a useful mechanism for preventing significant modification of the other colour channels when there is little or no increase detected in the colour channel corresponding to the dominant colour of the flashed light. This helps to minimise the introduction of artefacts in parts of the image not being illuminated by the flashing light.

We have also surprisingly found that it is possible to generate a key signal for the images in which the flash is not on, by looking for a decrease in the level of the flashed colour rather than an increase. The method we have developed for identifying corresponding parts of the temporally-adjacent images works equally well when these images have the flash off. Aspects of the invention can therefore advantageously produce an independent key signal for each frame or field for which an image is obtained.

It can be seen therefore that aspects of the present invention can produce a continuous sequence of output images together with a continuous key signal corresponding to those images.

Embodiments of the invention may therefore provide a method of obtaining a series of images of a scene containing at least one primary object and at least one secondary object to provide a real time video output of at least said at least one primary object and a real time key signal for distinguishing said at least one primary object from the at least one secondary object, the method comprising differentially lighting said at least one primary object and said at least one secondary object with key light having a selected colour property and a selected temporal variation; obtaining a sequence of images of the scene including at least said at least said primary object or secondary object; and deriving from the image sequence the key signal for distinguishing said at least one primary or secondary object based on detection of said key light. Preferably the real time key signal contains key information corresponding to each field or frame of said real time video output.

There is additionally described, a system comprising a camera, a foreground key light source for preferentially lighting a selected foreground object with light having a selected timing, a processor for deriving from the camera an image of the selected foreground image and a key signal for distinguishing the foreground object from a background.

Yet a further aspect of the invention provides apparatus for obtaining an image of a scene containing at least one primary object and at least one secondary object to provide an image of at least the primary object and a key signal for distinguishing the primary object from the secondary object, the apparatus comprising:

means for obtaining at least a first and a second image of the scene, both images including at least said primary and said secondary object, wherein the primary object is illuminated with key light having a selected colour, such that the secondary object is not illuminated by the key light or such that the primary object is illuminated with key light to a substantially higher extent than the secondary object and wherein the amplitude of the key light is different between the first image and the second image; and

means for deriving the key signal for distinguishing the primary object from the secondary object based on detection of different amounts of key light colour in the first and second images, respectively and means for processing the first or second image based on said different amounts of said key light colour to provide a third image of the scene in which the effect of said key light on the appearance of the primary object is reduced compared to the first or second image.

An embodiment of the invention will now be described in more detail, by way of example only, with reference to the accompanying drawings in which:-

Figure 1 shows a view from above of arrangement of a camera, lights and object in a studio in a manner suitable for use with this invention;

Figure 2 shows a block diagram of an implementation of the invention; and

Figure 3 shows a possible timing relationship between the pulsed light and the camera shutter, both for a camera being used in conjunction with this invention, and another camera in the same studio for which a key signal is not required.

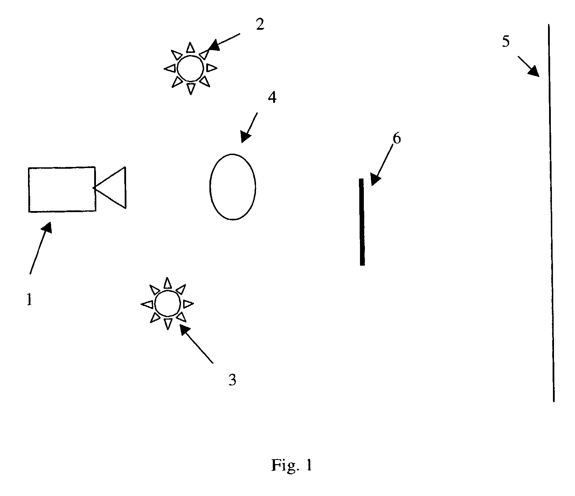

Referring to Figure 1, the camera 1 views a presenter 4 and a distant background 5, capturing images at a rate of 50Hz. It is desired to generate a key signal corresponding to the presenter so that a virtual object may be inserted in the camera image at a position corresponding to 6. The presenter is illuminated by blue lights 2, 3 flashing at 25Hz. The background 5 is sufficiently far away that the amount of flashing light reaching it is significantly less than the amount of light on the presenter.

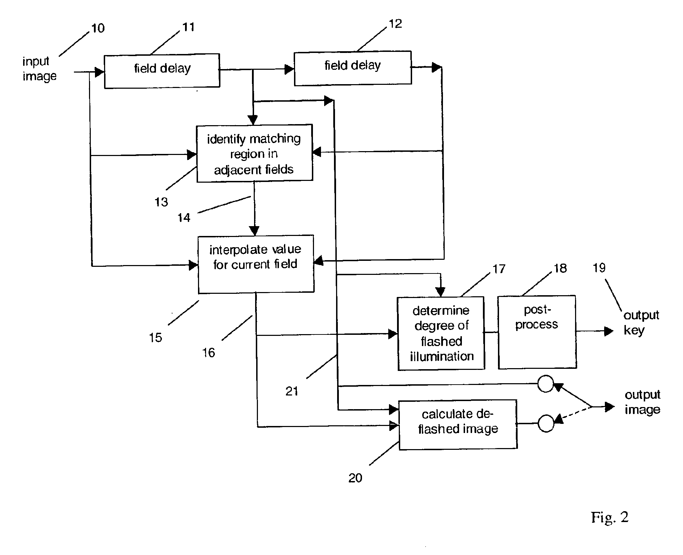

Referring to figure 2, the colour input image 10 from the camera is passed through two field delays, to make available the values of pixels in three successive fields.

Each pixel in the central field 21 (the second of the three successive fields) is compared to pixels in the preceding and following fields by the process 13 in order to determine which field gives the best match. A simple implementation of this process is to compute the sum of the modulus differences of the colour components not predominantly affected by the flash, between the pixel in the central field, and the pixel in the same position in the preceding field, and similarly for the central and following field. The difference between these two differences provides an indication of whether the preceding or following field gives the best match. A more sophisticated implementation could include a difference value based on the colour component subjected to the flash if this difference was much greater than the expected flash amplitude. A further refinement is to search a small region in the preceding and following fields to find the best match, thereby compensating for movement. Such a search process could make use of the many well-known motion estimation strategies, such as accumulating errors over a block, using an efficient search strategy, applying smoothness constraints to the motion estimation process, and so on. The output of the process 13 is a signal 14 which indicates, in the simplest case, which field (preceding, following or both) gives the best match. In the more sophisticated implementation, the signal 14 could include a motion vector for every pixel.

Using the information in the signal 14, a process 15 estimates the value for each pixel in the current field, by interpolation from the adjacent fields. In the simple case where the signal 14 indicates which field gives the best match, the process 15 can simply select the pixel from either the preceding or following field based on this signal, or form a weighted sum of these pixel values where both fields gave a similar degree of match. In a more sophisticated implementation incorporating motion compensation, the process 15 uses the motion vector data in the signal 14 to select pixels from appropriately-displaced locations in the adjacent fields. The interpolation process works in the same manner for both fields where the flash was on and for fields where the flash was off, and always generates an output field 16 with the opposite phase of flash to that of the central input field.

The interpolated value of each pixel in the interpolated image 16 is compared to the corresponding pixel value in the central field 21 by the process 17, in order to derive an estimate of the amount of flashing light present at each pixel in the image. At simplest, this process calculates the difference between the interpolated and actual pixel value for the colour component subjected to the flash, and multiplies it by either +1 or -1, depending on whether the flash was on or off in the central field, in order to generate a signal which is larger in areas illuminated by the flashing light. Where the flash has a significant effect on more than one colour component, the differences in all affected components may be used.

A simple difference may be used or more preferably a ratio or a more complex colour function may be used. One example of an enhanced calculation will now be explained.

Assuming the signal in the non-flashed field is (Rn, Gn, Bn) and that in the flashed field be (Rf, Gf, Bf), our underlying assumption is that

$$Rf = a.Rn$$

$$Gf = a.Gn$$

$$Bf = a.Bn + d$$

where $a$ is the brightness change factor between fields (potentially caused by a moving luminance edge in an object of uniform hue) and $d$ is the increase in blue due to the flash. Given these two pixel values, we want to compute $d$.

First, we compute $a$, by using (for example)

$$a = (Rf + Gf) / (Rn + Gn)$$

then we can compute $d$ using

$$d = Bf - a.Bn$$

This method can be compared with a more simple approach based on the change in the colour difference signal Cb, in which a value of d can be calculated as:

$$d = 0.9 * (Bf-Bn) - 0.3 * (Rf-Rn) - 0.6 * (Gf-Gn)$$

So, for example, a moving edge from (0.1,0.2,0.3) to (0.2,0.4,0.6) will on this simple measure give a false key signal of 0.15, whereas this would give zero with a ratio-based measure.

A potential problem is black areas in the non-flashed field, where $a$ might become large / undefined / very noisy. However adding a small constant offset to the numerator & denominator of the expression for $a$ would mitigate this problem, giving

$$a = (Rf + Gf + k) / (Rn + Gn + k)$$

where k should bear some relationship to the typical noise level (about 8 grey levels may be a suitable starting point for empirical investigation of typical signals).

Gamma-correction will also affect things, - it is possible to use a LUT to make more linear versions of the input, but it is a workable assumption in practice that all values lie on parts of the gamma curve with approximately similar slopes.

The signal generated by the process 17 may be processed in a post-processing stage 18 with operations commonly applied to a key signal, such as lift, gain, clipping, spatial filtering or morphological filtering, to generate the output key signal 19. Preferably operator controls are provided to adjust the levels of such processing. The controls should be adjusted so as to generate a full-amplitude (clipped) key signal in all areas where there is a significant level of pulsed light, and to provide a progressively-reducing key signal as the level of pulsed light drops towards zero.

It may be particularly advantageous to apply a vertical median filter to the key signal in applications where the input video is interlaced, in order to reduce the effect of interlace twitter, which might otherwise generate a false 25Hz twitter on horizontal blue edges. We have surprisingly found that, with the inclusion of such a filter, interlaced video may be processed directly, ignoring the vertical offset between corresponding lines of successive fields, without applying any deinterlacing processing in the matching or interpolation processes 13 and 14.

A vertical median filter may however be problematic in regions with large numbers of coloured horizontal edges (not usual in practice). In place of a vertical median filter (either a fixed alternative or an alternative which may be dynamically selected if numerous horizontal edges are detected) pixels in the current field may be compared with the corresponding pixels in both the line above and the line below in the preceding and following fields. The pixel that gives the closest match (or some weighted combination based on the closeness of match) is then used for subsequent processing. This is equivalent to incorporating a small degree of vertical motion estimation and compensation, sufficient to deal with the apparent vertical motion caused by interlace. Alternatively, a line in the required vertical position can be interpolated between the lines in each adjacent field.

A final process 20 generates an image corresponding to the central field, but with the flash removed. At simplest, this process will generate a new value for the colour component subjected to the flash by taking the lesser of the values for this component in the original central field 21 and the interpolated central field 16. If other colour components in the image are significantly affected by the flash, their values may also be derived in a similar manner. However, it is useful to limit the degree of correction that is applied to the other colour components, based on the degree of correction applied to the component predominantly affected by the flash, and the expected maximum ratio between them. For example, if the flashing light is blue, then the maximum degree of correction applied to the green channel might be set to be half of that applied to the blue, and the maximum degree of correction applied to red might be set to be minus a quarter of that applied to the blue. Such a negative degree of correction may be chosen for red if the combination of flashing light colour and the colour matrix in the camera were so as to make the presence of the flashing blue light result in a reduction of the red value generated from the camera.

The output image is then taken either from the output of the process 20, or from the original central image 21, depending on whether the flash was on or off.

Although the above explanation has assumed the use of both the preceding and following images, it is possible to implement the invention by using just the current and the preceding image. This has the advantage of reducing the delay through the processing by one image period and simplifying the processing, but will generally have poorer performance, particularly in areas of revealed background where there is no corresponding image portion in the preceding image with which to compare. To work with just the preceding and current images, the first field delay 11 is omitted, with the input image being used directly as the central field 21. The matching and interpolation processes 13 and 15 work with just the current and preceding field.

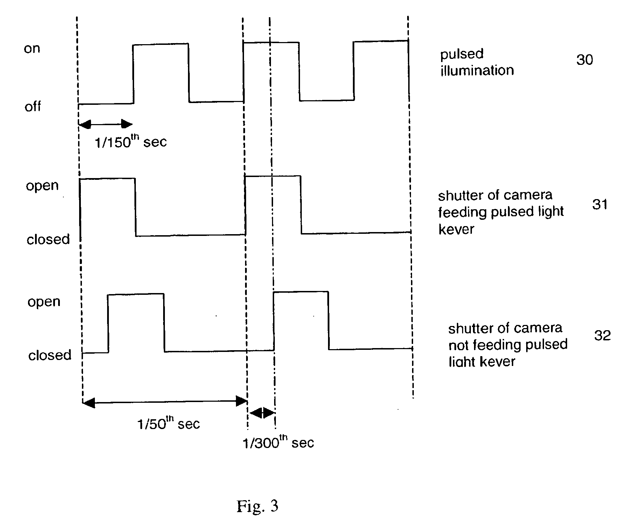

In some applications, the invention may be applied in a studio having several cameras, where some of the cameras are not in a position where they need to have a key signal generated for them. For such cameras, the processing can be simplified by omitting those parts of the invention not required, such as 17 and 18. An alternative approach is to choose the timing of the pulsed light and the camera shutters so as to eliminate the flashing effect from the cameras which do not need a key signal to be generated. Referring to the example in Figure 3, which assumes a 50Hz field rate camera, the illumination 30 is pulsed at a rate of 75Hz with a 50% duty cycle. The shutter of a camera feeding the pulsed light keyer described in this invention has an exposure time 31 of 1/150th of a second, phased so as to capture light from alternate flashes. Other cameras used in the same studio which do not need to use the keying process may have their shutters timed as shown by 32, so that each field sees the light on for half the time. This eliminates the flickering effect in the images from these cameras, although they will see the light always at half-brightness. Other timing combinations are clearly possible, for example to prevent any light from the pulsed light source being seen by the other studio cameras, the duration of both the camera shutter and the pulsed light can be reduced to 1/300th of a second or less if both are of equal duration but the primary consideration is that the combined duration is equal to 1/150th second so, with very short duration flashes, e.g. from a Xenon flash tube, the camera shutter time can be nearly 1/150th second and the camera will still not "see" the flash. For other camera rates (e.g. NTSC, 24 fps film), the times should be scaled accordingly.

Although Fig. 3 depicts one possible arrangement, it may be somewhat complicated by the fact that the 'camera not feeding pulsed light keyer' 32 has its shutter-closing time delayed with respect to the 'camera feeding pulsed light keyer' 32. Since the shutter-closing is normally tied to video timing, it would be preferable to include a video synchroniser on one or other camera's output to make this work well in a studio setup (this can be achieved relatively easily). An alternative system is to have the two cameras close their shutters at the same time, which is what will happen in a normal synchronous multi-camera studio, but to set the 'non-flash' camera's shutter to be open for twice the period of the 'flash' camera's shutter (1/75 sec compared with 1/150 sec). In general any camera with a shutter time of 1/75 sec will not "see" any flashing.

In some situations, it may be desirable to generate an output image in which the flash appears to be always on rather than always off. For example, a particular combination of flash rate and timing and duration of the shutters on other cameras in the studio may result in the flash always being visible by these cameras, as described above, and it may therefore be desirable if the output image from the camera which is being processed to generate the key also shows the scene with illumination corresponding to the flash always being on. This can be achieved simply by changing the operation of the process 20 to take the maximum value of the flashed colour component in the central and interpolated images instead of the minimum, making corresponding changes to the interpolation process for any other colour components, and changing the operation of the final switch so that the output from the process 20 is taken for images where the flash was off. Similarly, a half-intensity flash that is always visible may be produced by averaging the flashed colour component in the central and interpolated images.

Whilst the method we propose will generate a key signal for most parts of the illuminated object, there may be areas which are in shadow, such as folds in clothing, or areas which have a very low reflectivity, such as the pupils of eyes. The resulting holes in the generated key signal can be largely eliminated by the use of morphological filtering techniques such as median filtering, dilation followed by erosion, or region growing. Whereas median filtering may be useful for eliminating holes, it may also eliminate small areas of picture. This can be alleviated by taking the output pixel equal to the maximum of the original value and the median filtered value.

For areas which present particular problems, we have found that it is advantageous to position one flashing light substantially coincident with the camera, as this eliminates any self-shadowing effects. A ring of light-emitting diodes around the camera lens is suitable. Furthermore, areas of low reflectivity on the object may be coated with a thin layer of retroreflective material, such as the small half-silvered retro-reflective beads used in retro-reflective ink. This can substantially enhance their reflectivity whilst maintaining minimum visibility in the final image.

As noted above, for a 50Hz TV camera, the light could be flashed at 25Hz so that it is on in alternate fields but this flicker rate may be disturbing to performers and crew. It is preferable for the camera to be operated with a shutter to reduce the integration time to less than one field period, so that light could be flashed at a higher rate to reduce the annoyance to human observers. For example, the camera could be operated with an integration time of $1/150^{th}$ of a second, and the light could be flashed at a rate of 75Hz, with the phasing chosen so as to be visible in alternate fields.

The processing method proposed here can be implemented at full video rate using a modern PC, and does not require any special attachments to the camera. Suitable flashing illumination can conveniently be provided using light sources such as strobe lights, LEDs, or by placing a mechanical or opto-electronic shutter in front of a conventional light. The method thus provides a way of generating a key signal for a foreground object which is simpler and cheaper to implement than other methods previously proposed.

The basic invention may be extended to use two or more colours of flashing illumination. The pulsed illumination described above may contain several colours, in which case the process 13 which detects corresponding regions in adjacent images simply uses the colour channel least affected by the flash to determine the best match. If all colour channels are significantly affected, then the process can be modified so as to take less account of the overall amplitude of each colour component, but instead to use features such as edges and texture to determine the best match. Techniques such as normalised cross-correlation may be employed.

A further extension is to use two light sources of two different colours, flashing alternately. The region-matching process 13 may then perform its matching based predominantly on the colour component that is least affected by either colour, or make use of amplitude-independent features such as edges or texture as mentioned above. The interpolation process 15 operates as before, and will generate a version of the current field with the opposite phasing of each colour flash. The process 17 which determines the degree of flash operates in a similar manner as described previously, but will compute the differences for both flashed colour components, multiplying one by +1 and the other by -1 in accordance with the phase of the flashing. The two difference signals may then be added together to obtain an overall measure of the degree of flashed illumination. Other methods of combining them, such as taking the largest or the smallest, may also be used. The calculation of the de-flashed image by the process 20 operates in a similar manner to before, taking the smallest of the interpolated or original values for each colour component. The output image, however, is then always taken from the output of this process, since every field needs to have a flash removed. By taking the maximum rather than the minimum of one or both colour components, the output image may be generated so as to appear to have one or both lights on continuously, rather than off, if this is desired.

Although the invention has been described with reference to a colour representation based on red, green and blue, the method may be applied to any other colour representation. In particular, it may be advantageous to change the initial colour representation to make the pulsed light appear predominantly in one component, if this is not initially the case. This may be achieved by applying a matrixing operation to the colour signal from the camera, similar to that used for converting between RGB and YUV representations, but with the coefficients chosen to make the pulsed light appear predominantly in one component.

Although the invention has been described in the context of keying for PAL TV production, it may be applied to film production, with the pulse rate modified to suit a 24Hz or 25Hz image rate, or an NTSC or other standard. All references to timings and rates should be construed *mutatis mutandis* accordingly. For very high-quality results, a camera operating at twice the normal rate could be used, so that the images containing the flash can be discarded after key generation rather than requiring them to be processed to remove the flash.

The invention may be applied in other fields where it is necessary to key out an object from an image without using a special background. For example, for video-conferencing, it may be desirable to show the participant against a virtual background. By placing a pulsed light close to the participant so as to illuminate him and not the background, the invention described here may be used. Indeed, for a user sitting close to a display such as a CRT which inherently emits pulsed light, it may be possible to use this as the light source. Thus a key signal will be generated for objects in the image that are close to the display.

Other applications for the invention include detecting the position of objects or people, such as the occupants of a car in a system to control the deployment of an air bag. By illuminating the region of space in which the object or person is to be detected with pulsating light and viewing this area with a camera, the invention can be used to generate a "key signal" which is an image showing which parts of the region contain an object. In contrast to prior art methods which rely on measuring the time-of-flight of light to detect object position, this approach is significantly simpler if all that is required is to know whether there is an object in a zone that can be illuminated with a pulsed light. In such a case, it may not be necessary to process the image to reduce the effect of the light.

To summarise, a basic aspect of the invention comprises illuminating the scene with light having characteristics which can be detected by a (preferably "normal") camera so as to generate a key signal, and then removing unwanted aspects of the illumination from the final image. The use of flashing light is only one specific way of doing this. Other characteristics, such as projecting a stripy pattern may be used but may require significant processing.

**Claims**

1. A method of obtaining an image of a scene containing at least one primary object and at least one secondary object to provide an image of at least the primary object and a key signal for distinguishing the primary object from the secondary object, the method comprising:

   illuminating the primary object with key light having a selected colour and a selected temporal variation, such that the secondary object is not illuminated by the key light or such that the primary object is illuminated with key light to a substantially higher extent than the secondary object ;
   obtaining at least a first and a second image of the scene both including the primary object and the secondary object, the temporal variation of the key light being such that the amplitude of the key light is different between the first image and the second image;
   deriving the key signal for distinguishing the primary object from the secondary object through comparison of different amounts of key light colour in the first and second images, respectively; and
   processing the first or second image based on said different amounts of said key light colour to provide a third image of the scene in which the effect of said key light on the appearance of the primary object is reduced compared to the first or second image.

2. A method according to Claim 1 wherein the at least one primary object is a foreground object and wherein the at least one secondary object is a background object.

3. A method according to any preceding claim wherein processing comprises adjusting the colour and/or brightness, preferably at least colour of the first image.

4. A method according to Claim 3 wherein the colour is adjusted by determining portions of the first image which substantially correspond to portions of the second image in which the key light has a different amount.

5. A method according to Claim 4 wherein the colour is adjusted by adjusting the relative proportions of colours of pixels in the first image based on the relative proportions of colours of pixels in the second image.

6. A method according to any preceding claim wherein the key light is on for the first image and substantially off for the second image corresponding to another field or frame, preferably an adjacent field or frame.

7. A method according to any preceding claim, wherein the key light is only applied during some frames of a sequence of frames and processing comprises comparing a first field or frame in which the key light is on to a second field or frame in which the key light is off.

8. A method according to any preceding claim wherein the image is captured by a camera having shutter periods and wherein the key light is applied so as to be on during alternate camera shutter periods.

9. A method according to Claim 8 wherein the key light is applied additionally during at least some periods when the camera shutter is closed, preferably at least once for each shutter period.

10. A method according to Claim 8 or 9 wherein the camera shutter open period is limited to 1/3 the shutter interval and the key light is applied with a pattern that is on for one third of a shutter interval and off for one third of an interval.

11. A method according to any preceding claim wherein on periods of a key light source differ in duration from off periods and/or on periods differ from each other in duration and/or the intensity of light.

12. A method according to any preceding claim wherein each image is captured by a camera having shutter periods and wherein the key light is applied close to the start of the shutter opening time, the timing of the flashes preferably being dithered.

13. A method according to Claim 12 wherein the intensities are chosen so that the perceived effect of flickering is reduced.

14. A method according to any preceding claim, wherein the method is performed repeatedly to obtain a sequence of captured images of said scene, wherein the amount of key light varies across images in the sequence of captured images; deriving from the sequence of captured images a key signal comprising a sequence of key images in which said primary and secondary objects are distinguished based on the effect of key light; and
deriving a sequence of real time output images from the sequence of captured images in which the effect of variation of key light in the sequence of output images is reduced with respect to the sequence of captured images.

15. A method according to Claim 14, wherein a key image is produced for each output image.

16. Apparatus for obtaining an image of a scene containing at least one primary object and at least one secondary object to provide an image of at least the primary object and a key signal for distinguishing the primary object from the secondary object, the apparatus comprising:

means for obtaining at least a first and a second image of the scene, both images including at least said primary and said secondary object, wherein the primary object is illuminated with key light having a selected colour, such that the secondary object is not illuminated by the key light or such that the primary object is illuminated with key light to a substantially higher extent than the secondary object and wherein the amplitude of the key light is different between the first image and the second image; and
means for deriving the key signal for distinguishing the primary object from the secondary object based on detection of different amounts of key light colour in the first and second images, respectively and means for processing the first or second image based on said different amounts of said key light colour to provide a third image of the scene in which the effect of said key light on the appearance of the primary object is reduced compared to the first or second image.

17. Apparatus according to Claim 16 arranged to perform a method according to any of Claims 1 to 15.

18. A computer program or computer program product comprising instructions for performing a method according to any preceding method claim.


**Patentansprüche**

1. Verfahren zur Gewinnung eines Bildes von einer Szene, enthaltend mindestens ein primäres Objekt und mindestens ein sekundäres Objekt, um ein Bild von zumindest dem primären Objekt und ein Stanzsignal zur Unterscheidung des primären Objekts von dem sekundären Objekt zur Verfügung zu stellen, wobei das Verfahren Folgendes umfasst:

Beleuchten des primären Objekts durch Stanzlicht mit einer ausgewählten Farbe und einer ausgewählten zeitlichen Variation, und zwar derart, dass das sekundäre Objekt nicht von dem Stanzlicht beleuchtet wird oder dass das primäre Objekt mit Stanzlicht in einem im Wesentlichen höheren Maß als das sekundäre Objekt beleuchtet wird;

Gewinnen zumindest eines ersten und eines zweiten Bildes von der Szene, die beide das primäre Objekt und das sekundäre Objekt beinhalten, wobei die zeitliche Variation des Stanzlichts so ausfällt, dass die Amplitude des Stanzlichts beim ersten Bild anders ist als beim zweiten Bild;

Ableiten des Stanzsignals zur Unterscheidung des primären Objekts von dem sekundären Objekt durch Vergleich unterschiedlicher Mengen von Stanzlichtfarbe in jeweils dem ersten und dem zweiten Bild; und Verarbeiten des ersten oder zweiten Bildes basierend auf den unterschiedlichen Mengen der Stanzlichtfarbe, um ein drittes Bild von der Szene zur Verfügung zu stellen, in dem der Effekt des Stanzlichts auf das Aussehen des primären Objekts im Vergleich zu dem ersten oder zweiten Bild vermindert ist.

2. Verfahren nach Anspruch 1, wobei das mindestens eine primäre Objekt ein Vordergrundobjekt ist und wobei das mindestens eine sekundäre Objekt ein Hintergrundobjekt ist.

3. Verfahren nach einem der vorangehenden Ansprüche, wobei das Verarbeiten das Regulieren der Farbe und/oder der Helligkeit umfasst, vorzugsweise zumindest der Farbe des ersten Bildes.

4. Verfahren nach Anspruch 3, wobei die Farbe durch Bestimmen von Abschnitten des ersten Bildes reguliert wird, die im Wesentlichen Abschnitten des zweiten Bildes entsprechen, in denen das Stanzlicht eine andere Menge hat.

5. Verfahren nach Anspruch 4, wobei die Farbe reguliert wird, indem die relativen Anteile von Pixelfarben im ersten Bild basierend auf den relativen Anteilen von Pixelfarben im zweiten Bild reguliert werden.

6. Verfahren nach einem der vorangehenden Ansprüche, wobei das Stanzlicht für das erste Bild an und für das zweite Bild im Wesentlichen aus ist, das einem anderen Halbbild oder Vollbild entspricht, vorzugsweise einem benachbarten Halbbild oder Vollbild.

7. Verfahren nach einem der vorangehenden Ansprüche, wobei das Stanzlicht nur während einiger Vollbilder aus einer Sequenz von Vollbildern angewandt wird und die Verarbeitung das Vergleichen eines ersten Halbbildes oder Vollbildes, in dem das Stanzlicht an ist, mit einem zweiten Halbbild oder Vollbild umfasst, in dem das Stanzlicht aus ist.

8. Verfahren nach einem der vorangehenden Ansprüche, wobei das Bild durch eine Kamera mit Verschlussperioden erfasst wird und wobei das Stanzlicht so angewandt wird, dass es während abwechselnden Kameraverschlussperioden an ist.

9. Verfahren nach Anspruch 8, wobei das Stanzlicht zusätzlich während zumindest einiger Perioden angewandt wird, wenn der Kameraverschluss geschlossen ist, vorzugsweise mindestens einmal für jede Verschlussperiode.

10. Verfahren nach Anspruch 8 oder 9, wobei die Öffnungsperiode des Kameraverschlusses auf 1/3 des Verschlussintervalls begrenzt ist und das Stanzlicht mit einem Muster angewandt wird, das für ein Drittel eines Verschlussintervalls an und für ein Drittel eines Intervalls aus ist.

11. Verfahren nach einem der vorangehenden Ansprüche, wobei sich An-Perioden einer Stanzlichtquelle in ihrer Dauer von Aus-Perioden unterscheiden und/oder sich An-Perioden in ihrer Dauer und/oder der Lichtintensität voneinander unterscheiden.

12. Verfahren nach einem der vorangehenden Ansprüche, wobei jedes Bild durch eine Kamera mit Verschlussperioden erfasst wird und wobei das Stanzlicht nahe dem Beginn der Verschlussöffnungszeit angewandt wird, wobei das Timing der Blitze vorzugsweise gedithert wird.

13. Verfahren nach Anspruch 12, wobei die Intensitäten so gewählt werden, dass der wahrgenommene Flimmereffekt vermindert wird.

14. Verfahren nach einem der vorangehenden Ansprüche, wobei das Verfahren wiederholt durchgeführt wird, um eine Sequenz erfasster Bilder von der Szene zu erhalten, wobei die Stanzlichtmenge quer durch die Bilder in der Sequenz erfasster Bilder variiert; Ableiten eines Stanzsignals aus der Sequenz erfasster Bilder, umfassend eine Sequenz von Stanzbildern, in denen das primäre und das sekundäre Objekt basierend auf der Stanzlichtwirkung unterschieden werden; und

Ableiten einer Sequenz von Echtzeitoutputbildern aus der Sequenz erfasster Bilder, wobei der Effekt der Stanzlichtvariation in der Sequenz von Outputbildern in Bezug auf die Sequenz erfasster Bilder vermindert wird.

**15.** Verfahren nach Anspruch 14, wobei ein Stanzbild für jedes Outputbild erzeugt wird.

**16.** Vorrichtung zur Gewinnung eines Bildes von einer Szene, enthaltend mindestens ein primäres Objekt und mindestens ein sekundäres Objekt, um ein Bild von zumindest dem primären Objekt und ein Stanzsignal zur Unterscheidung des primären Objekts von dem sekundären Objekt zur Verfügung zu stellen, wobei die Vorrichtung Folgendes umfasst:

Mittel zur Gewinnung zumindest eines ersten und eines zweiten Bildes von der Szene, wobei beide Bilder zumindest das primäre und das sekundäre Objekt beinhalten, wobei das primäre Objekt von Stanzlicht mit einer ausgewählten Farbe so beleuchtet wird, dass das sekundäre Objekt nicht von dem Stanzlicht beleuchtet wird oder dass das primäre Objekt mit Stanzlicht in einem im Wesentlichen höheren Maß als das sekundäre Objekt beleuchtet wird, und wobei die Amplitude des Stanzlichts beim ersten Bild anders ist als beim zweiten Bild; und Mittel zur Ableitung des Stanzsignals zur Unterscheidung des primären Objekts von dem sekundären Objekt basierend auf der Detektion jeweils unterschiedlicher Mengen von Stanzlichtfarbe in dem ersten und dem zweiten Bild und Mittel zur Verarbeitung des ersten oder zweiten Bildes basierend auf den unterschiedlichen Mengen der Stanzlichtfarbe, um ein drittes Bild von der Szene zur Verfügung zu stellen, in dem der Effekt des Stanzlichts auf das Aussehen des primären Objekts im Vergleich zum ersten oder zweiten Bild vermindert ist.

**17.** Vorrichtung nach Anspruch 16, die eingerichtet ist, um ein Verfahren nach einem der Ansprüche 1 bis 15 durchzuführen.

**18.** Computerprogramm oder Computerprogrammprodukt, welches Anweisungen zur Durchführung eines Verfahrens nach einem der vorangehenden Verfahrensansprüche umfasst.

**Revendications**

**1.** Procédé d'obtention d'une image d'une scène contenant au moins un objet principal et au moins un objet secondaire pour fournir une image d'au moins l'objet principal et un signal de base pour distinguer l'objet principal de l'objet secondaire, le procédé comprenant les étapes consistant à :

éclairer l'objet principal avec une lumière de base ayant une couleur sélectionnée et
une variation temporelle sélectionnée de sorte que l'objet secondaire ne soit pas éclairé par la lumière de base ou de sorte que l'objet principal soit éclairé par la lumière de base dans une mesure sensiblement plus importante que l'objet secondaire ;
obtenir au moins une première et une deuxième image de la scène comprenant à la fois l'objet principal et l'objet secondaire, la variation temporelle de la lumière de base étant telle que l'amplitude de la lumière de base soit différente entre la première image et la deuxième image ;
dériver le signal de base pour distinguer l'objet principal de l'objet secondaire par une comparaison de quantités différentes de couleur de lumière de base dans les première et deuxième images, respectivement ; et
traiter la première ou la deuxième image sur la base desdites quantités différentes de ladite couleur de lumière de base pour fournir une troisième image de la scène dans laquelle l'effet de ladite lumière de base sur l'aspect de l'objet principal est réduit en comparaison avec la première et la deuxième image.

**2.** Procédé selon la revendication 1, dans lequel le au moins un objet principal est un objet de premier plan et dans lequel le au moins un objet secondaire est un objet d'arrière-plan.

**3.** Procédé selon l'une quelconque des revendications précédentes, dans lequel le traitement comprend l'ajustement de la couleur et/ou de la luminosité, de préférence au moins de la couleur de la première image.

**4.** Procédé selon la revendication 3, dans lequel la couleur est ajustée en déterminant les portions de la première image qui correspondent sensiblement aux portions de la deuxième image dans laquelle la lumière de base a une quantité différente.

**5.** Procédé selon la revendication 4, dans lequel la couleur est ajustée en ajustant les proportions relatives de couleurs de pixels dans la première image sur la base des proportions relatives de couleurs de pixels dans la deuxième image.

**6.** Procédé selon l'une quelconque des revendications précédentes, dans lequel la lumière de base est allumée pour la première image et sensiblement éteinte pour la deuxième image correspondant à un autre champ ou vue, de préférence un champ ou vue adjacent.

7.  Procédé selon l'une quelconque des revendications précédentes, dans lequel la lumière de base est appliquée uniquement pendant certaines vues d'une séquence de vues et le traitement comprend la comparaison d'un premier champ ou vue dans lequel la lumière de base est allumée à un second champ ou vue dans lequel la lumière de base est éteinte.

8.  Procédé selon l'une quelconque des revendications précédentes, dans lequel l'image est capturée par un appareil photographique présentant des périodes d'obturation et dans lequel la lumière de base est appliquée de manière à être allumée pendant les périodes d'obturation alternées de l'appareil photographique.

9.  Procédé selon la revendication 4, dans lequel la lumière de base est appliquée additionnellement pendant au moins certaines périodes lorsque l'obturateur de l'appareil photographique est fermé, de préférence au moins une fois par période d'obturation.

10. Procédé selon la revendication 8 ou 9, dans lequel la période d'ouverture de l'obturateur de l'appareil photographique est limitée à 1/3 de l'intervalle d'obturation et la lumière de base est appliquée selon un schéma allumé pendant un tiers d'un intervalle d'obturation et éteint pendant un tiers d'un intervalle.

11. Procédé selon l'une quelconque des revendications précédentes, dans lequel des périodes de marche d'une source de lumière de base diffèrent en termes de durée des périodes d'arrêt et/ou les périodes de marche diffèrent les unes des autres en termes de durée et/ou l'intensité de la lumière.

12. Procédé selon l'une quelconque des revendications précédentes, dans lequel chaque image est capturée par un appareil photographique présentant des périodes d'obturation et dans lequel la lumière de base est appliquée à proximité du début de la durée d'ouverture d'obturateur, le déclenchement des flashs étant de préférence aléatoire.

13. Procédé selon la revendication 12, dans lequel les intensités sont choisies de sorte que l'effet de tremblement perçu soit réduit.

14. Procédé selon l'une quelconque des revendications précédentes, dans lequel le procédé est exécuté de manière répétée pour obtenir une séquence d'images capturées de ladite scène, dans lequel la quantité de lumière de base varie selon les images dans la séquence d'images capturées ; dérivant de la séquence d'images capturées un signal de base comprenant une séquence d'images de bases dans lequel lesdits objets principal et secondaire se distinguent sur la base de l'effet de lumière de base ; et
dérivant une séquence d'images de sortie en temps réel de la séquence d'images capturées dans lequel l'effet de variation de lumière de base dans la séquence d'images de sortie est réduit par rapport à la séquence d'images capturées.

15. Procédé selon la revendication 14, dans lequel une image de base est produite pour chaque image de sortie.

16. Appareil pour l'obtention d'une image d'une scène contenant au moins un objet principal et au moins un objet secondaire pour fournir une image d'au moins l'objet principal et un signal de base pour distinguer l'objet principal de l'objet secondaire, l'appareil comprenant :

   un moyen pour obtenir au moins une première et une seconde image de la scène, les deux images comprenant au moins ledit objet principal et ledit objet secondaire, dans lequel l'objet principal est éclairé avec la lumière de base d'une couleur sélectionnée, de sorte que l'objet secondaire ne soit pas éclairé par la lumière de base ou de sorte que l'objet principal soit éclairé avec la lumière de base dans une mesure sensiblement plus importante que l'objet secondaire et dans lequel l'amplitude de la lumière de base est différente entre la première image et la deuxième image ; et
   un moyen pour dériver le signal de base pour distinguer l'objet principal de l'objet secondaire sur la base de la détection de quantités différentes de couleur de lumière de base dans les première et deuxième images, respectivement et un moyen pour traiter les première et deuxième images sur la base desdites quantités différentes de ladite couleur de lumière de base pour fournir une troisième image de la scène dans laquelle l'effet de ladite lumière de base sur l'aspect de l'objet principal est réduit en comparaison avec la première ou la deuxième image.

**17.** Appareil selon la revendication 16, agencé pour exécuter un procédé selon l'une quelconque des revendications 1 à 15.

**18.** Programme informatique ou produit de programme informatique comprenant des instructions pour exécuter un procédé selon l'une quelconque des revendications précédentes.

Fig. 1

Fig. 2

| | | | pulsed illumination | 30 |

on

off

1/150th sec

open

closed

shutter of camera feeding pulsed light kever — 31

open

closed

shutter of camera not feeding pulsed light kever — 32

1/50th sec

1/300th sec

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2321814 A
- WO 03030526 A
- GB 2321565 A

**Non-patent literature cited in the description**

- **G.J. IDDAN ; G. YAHAV.** 3D Imaging in the studio (and elsewhere.... *Proc. Of SPIE, Conference Proc. of Videometrics and Optical Methods for 3D Shape Measurement,* January 2001, 48-55
- **C. ROCCHINI et al.** A low-cost 3D scanner based on structured light. *Eurographics,* 2001, vol. 20